# EUROPÄISCHE PATENTSCHRIFT

(11) **EP 2 126 643 B1**
(45) Veröffentlichungstag und Bekanntmachung des Hinweises auf die Patenterteilung: **20.10.2010**
(21) Anmeldenummer: 08708994.2
(22) Anmeldetag: 14.02.2008
(51) Int. Cl.: G05B 19/05

(54) **VERFAHREN ZUM AUSTAUSCH VON STRUKTURKOMPONENTEN FÜR EIN AUTOMATISIERUNGSSYSTEM**
METHOD FOR EXCHANGING STRUCTURAL COMPONENTS FOR AN AUTOMATION SYSTEM
PROCÉDÉ D'ÉCHANGE DE COMPOSANTS STRUCTURELS POUR UN SYSTÈME D'AUTOMATISATION

(30) Priorität: 14.02.2007 DE 102007007350
(43) Veröffentlichungstag der Anmeldung: 02.12.2009
(73) Patentinhaber: Siemens Aktiengesellschaft, 80333 München (DE)
(72) Erfinder: DREBINGER, Andreas, 91074 Herzogenaurach (DE)
(86) Internationale Anmeldenummer: PCT/EP2008/051800
(87) Internationale Veröffentlichungsnummer: WO 2008/098989

(56) Entgegenhaltungen:
- EP-A- 0 757 305
- EP-A- 1 674 956

## Beschreibung

Die Erfindung betrifft ein Verfahren zum Austausch von Strukturkomponenten für ein Automatisierungssystem.

Die Automatisierung von Großanlagen, wie beispielsweise Kraftwerksanlagen, erfordert flexible und vielseitig einsetzbare Leittechnik- und Automatisierungssysteme, um die immer komplexer werdenden Steuerungs- und Regelungsaufgaben zu handhaben.

Veränderungen oder Anpassungen an aktuelle Bedingungen werden im Leittechniksystem mittels der Projektierung durchgeführt. Dabei bedient man sich heute überwiegend graphischer Projektierwerkzeuge. Die im Leittechniksystem in der Projektierungsumgebung durchgeführten Änderungen kommen in der Ablaufumgebung des hierarchisch untergeordneten Automatisierungssystems, welches aus einer Vielzahl speicherprogrammierbarer Steuerungen besteht, zur Ausführung.

In der europäischen Norm EN 61131-3, auch bekannt als IEC 61131-3 oder IEC 1131-3 werden fünf Programmiersprachen definiert, mit denen speicherprogrammierbare Steuerungen programmiert werden können. Ein Beispiel für ein vollgraphisches Projektierwerkzeug ist die graphische Programmiersprache Continuous Function Chart (CFC), die speziell bei speicherprogrammierbaren Steuerungen in der Automatisierungstechnik Anwendung findet. Bestandteil der oben genannten Norm ist weiterhin die Funktionsbausteinsprache Function Block Diagram (FBS). Es handelt sich dabei ebenfalls um eine grafisch orientierte Programmiersprache. Im FBS-Programm werden Funktionen durch Funktionsbausteine mit Ein- und Ausgängen und deren Verbindungen durch Linien repräsentiert. Weiterhin sind auch Variablen und Konstanten enthalten. Ein solches FBS-Programm wird häufig auch als Funktionsplan bezeichnet.

Innerhalb eines Funktionsplans existieren unterschiedliche Typen von Funktionsbausteinen. Im Folgenden sollen insbesondere so genannte Strukturkomponenten betrachtet werden, die sich dadurch auszeichnen, dass sie frei gestaltbar und anwenderspezifisch einsetzbar sind. Als Strukturkomponente wird demnach ein Bausteintyp im Sinne der EN 61131-3 bezeichnet, der von einem Anwender durch die Parametrierung und Verschaltung von Basistypen (d.h. Standard-Bausteinen) frei erstellt werden kann. Ein Strukturkomponententyp kann demnach wie ein Standard-Bausteintyp mehrfach projektiert werden.

Eine Veränderung einer solchen Strukturkomponente war bisher stets mit großem Aufwand bei der Projektierung verbunden. Wie andere Programmbausteine mussten Strukturkomponenten stets manuell an allen Stellen innerhalb des Funktionsplans geändert werden. Insbesondere existierten keine flexiblen Änderungsmöglichkeiten und Aktualisierungsmöglichkeiten von bestehenden bereits projektierten und im Automatisierungssystem aktivierten Strukturkomponenten im laufenden Betrieb. Jegliche Änderungen in der Projektierung waren stets mit erheblichen Einschränkungen des laufenden Betriebs verbunden. Der ablaufende Prozess musste in der Regel unterbrochen werden.

In der europäischen Patentanmeldung EP 0 757 305 A1 ist eine freiprogrammierbare Steuerung ("programmable logic controller" = PLC) zur Ausführung eines Steuerprozesses in einem Automatisierungssystem durch die Ausführung eines Anwenderprogramms beschrieben. Innerhalb eines Mikroprozessors der Steuerung kann eine Markierung gesetzt werden, die zur Folge hat, dass während einer bestimmten Zeitdauer keine Änderung an dem Anwenderprogramm durchgeführt werden kann. Eventuell vorzunehmende Änderungen werden in einem Arbeitsspeicher hinterlegt. Soll die Änderung tatsächlich durchgeführt werden, was durch einen entsprechenden Befehl angezeigt wird, muss die zuvor gesetzte Markierung aufgehoben werden. Erst nach Aufhebung der Markierung wird die zuvor im Arbeitsspeicher abgelegte Programmänderung automatisch ausgeführt und der Prozess wird im nächsten Zyklus verändert fortgeführt.

Es ist Aufgabe der Erfindung, ein Verfahren zum Austausch von Strukturkomponenten für ein Automatisierungssystem anzugeben, bei dem der laufende Betrieb des Automatisierungssystems durch Einbringen von projektierten Änderungen nicht unterbrochen wird.

Diese Aufgabe wird durch die Merkmale des unabhängigen Patentanspruchs 1 gelöst. Vorteilhafte Ausgestaltungen sind jeweils in den abhängigen Patentansprüchen wiedergegeben.

Erfindungsgemäß wird während des laufenden Betriebs des Automatisierungssystems unabhängig vom Ablauf der Funktion der Strukturkomponente ein Typ einer Strukturkomponente zunächst mittels eines Projektierungswerkzeugs in der Projektierungsumgebung verändert, wobei eine Kennzeichnung des Typs stets erhalten bleibt. Anschließend wird die Instanz der Strukturkomponente im Funktionsplan durch die veränderte Strukturkomponente ausgetauscht und die Strukturänderungen entsprechend vermerkt. In einem nächsten Schritt wird parallel zum und ohne Rückwirkung auf den laufenden Betrieb des Automatisierungssystems die ausgetauschte Strukturkomponente in das Automatisierungssystem übertragen. Im Automatisierungssystem wird dann unterbrechungsfrei auf eine Konfiguration, die die ausgetauschte Strukturkomponente berücksichtigt, umgeschaltet, so dass die veränderte und ausgetauschte Strukturkomponente aktiviert wird.

Durch die Erfindung ergibt sich vorteilhaft eine flexible und vielseitig einsetzbare technische Lösung zum stoßfreien Ändern von Automatisierungsfunktionen innerhalb eines Leittechniksystems oder Automatisierungssystems.

Es können anwenderspezifische und frei gestaltbare Strukturkomponenten erstellt und beliebig bei laufendem Betrieb ausgetauscht werden. Eine Aktualisierung von bestehenden, bereits projektierten und im Automatisierungssystem aktivierten Komponenten ist nun ohne Unterbrechungen oder Auswirkungen auf den Prozess durchführbar. Ferner hat der Anwender insbesondere die Möglichkeit, die Aktualisierung des Typs der Strukturkomponente zunächst auf bestimmte Instanzen zu begrenzen. Interne Konsistenzprüfungen gewährleisten ein rückwirkungsfreies Einbringen von Projektierungsänderungen.

Ein weiterer Vorteil der Erfindung liegt darin, dass es keine zusätzlichen Anforderungen an das zugrundeliegende Automatisierungssystem stellt und somit zielsystem-neutrale Strukturkomponenten erstellt werden können. So kann in einem Leittechniksystem ein und dieselbe Strukturkomponente beispielsweise sowohl in einem Automatisierungssystem SIMATIC S7 der Fa. Siemens als auch in einem Java basierten Automatisierungscontainer zum Ablauf gebracht werden.

Die Erfindung wird nachfolgend anhand eines in den Zeichnungen dargestellten Ausführungsbeispiels näher erläutert. Dabei zeigen:
- Fig. 1: ein Schaltbild einer ersten Strukturkomponente SK1,
- Fig. 2: einen Ausschnitt aus einem Funktionsplan mit einer Instanz des in Fig. 1 definierten Typs der Struk- turkomponente,
- Fig. 3: ein Schaltbild der veränderten Strukturkomponente SK1,
- Fig. 4: einen Ausschnitt aus einem Funktionsplan mit einer Instanz des in Fig. 3 definierten Typs der Struk turkomponente und
- Fig. 5: ein Schaltbild des unterlagerten Funktionsplans der veränderten Strukturkomponente SK1.

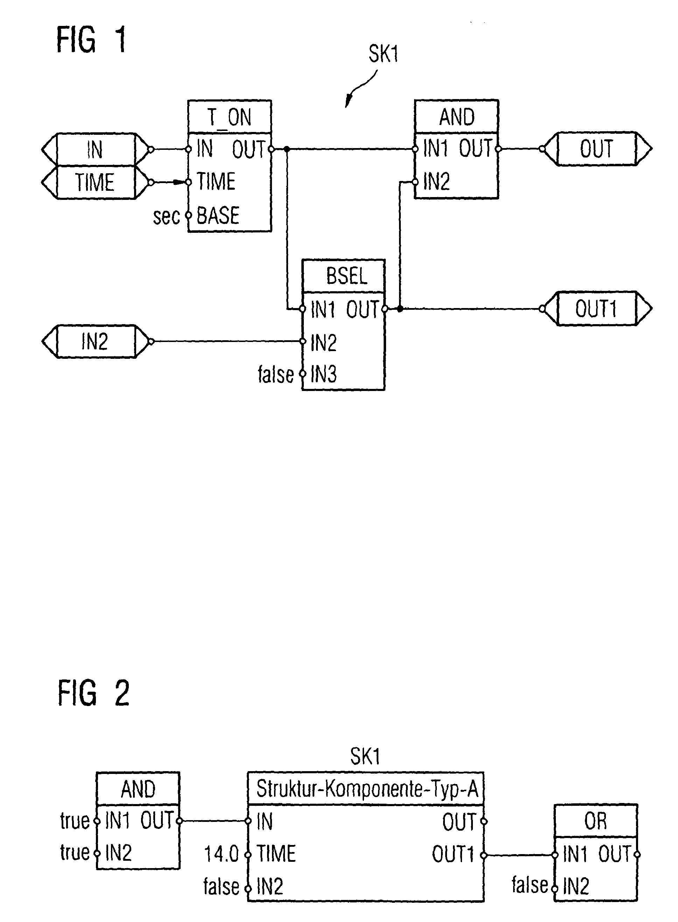

Figur 1 zeigt ein detailliertes Schaltbild einer Strukturkomponente SK1. Die Strukturkomponente SK1 umfasst in diesem Ausführungsbeispiel drei Standard-Bausteine T_ON, BSEL und AND, die zur Erreichung einer bestimmten Funktion miteinander verschaltet sind. Jeder Baustein besitzt mindestens einen Ein- und einen Ausgang. In diesem Ausführungsbeispiel sind die Eingänge IN und TIME des Bausteins T_ON mit den Konnektoren IN und TIME verbunden. Dementsprechend ist der Eingang IN2 des Bausteins BSEL mit dem Konnektor IN2 verbunden. Die auf der linken Bildseite angeordneten Konnektoren repräsentieren die Eingangsschnittstellen der Strukturkomponente SK1. Durch die Schnittstellen wird die Interaktion mit anderen Programmteilen geregelt. Die Konnektoren der Ausgangsschnittstellen OUT und OUT1 sind auf der rechten Bildseite angeordnet. Sie sind mit den entsprechenden Ausgängen der Bausteine AND und BSEL verbunden. Die Strukturkomponente SK1 mit dem beschriebenen Aufbau wird hier als Strukturkomponente vom Typ A definiert. Bei der Erstellung des Typs der Strukturkomponente SK1 wird intern (d.h. bezogen auf das vorhandene System) eine eindeutige Identifizierung des Typs der Strukturkomponente vergeben. Dazu kann beispielsweise ein GUID (engl. "Globally Unique Identifier") vergeben. Die Erstellung einer solchen Strukturkomponente erfolgt in der Regel manuell mittels eines Projektierungswerkzeugs (z.B. Editor) in einer Projektierungsumgebung (z.B. Leitsystem). Nach der Erstellung des Typs der Strukturkomponente SK1 wird dieser beispielsweise in einer Programmbibliothek hinterlegt. Anschließend kann die Strukturkomponente SK1 wie ein Standard-Baustein in der Projektierung verwendet werden.

Figur 2 zeigt den Ausschnitt eines Funktionsplans mit einer Instanz des zuvor definierten Typs der Strukturkomponente SK1. Unter Instanz ist die konkrete Verwendung der Strukturkomponente im Funktionsplan zu verstehen. Die Instanzierung der Strukturkomponente bedeutet demnach den Einsatz der Strukturkomponente im Funktionsplan und damit im Gesamtsystem. Die Strukturkomponente vom Typ A wird in dem Funktionsplan projektiert, parametriert und mit anderen Bausteinen verschaltet. Sie ist in diesem Ausführungsbeispiel zwischen den logischen Standard-Bausteinen AND und OR angeordnet. Die Verschaltung mit den anderen Bausteinen kann über die Schnittstellen IN, TIME, IN2 und OUT und OUT1 erfolgen, wobei in diesem Beispiel nur die Schnittstellen IN und OUT1 verschaltet sind.

Um das in eine Strukturkomponente eingeflossene Know-How zu schützen, kann jede Strukturkomponente über ein Password oder eine spezifische Lizenz geschützt werden. Wurde die Strukturkomponente nicht geschützt, so kann der Anwender die detaillierte Verschaltung, wie sie für SK1 beispielsweise in Fig. 1 dargestellt ist, einsehen. Ohne die erforderliche Autorisierung kann der Anwender die zugrunde liegende Verschaltung nicht einsehen bzw. je nach Zugriffsschutz zwar öffnen aber nicht verändern.

Bei laufendem Betrieb des Automatisierungssystems ist der Funktionsplan mit all seinen Bausteinen aktiviert. Eine Aktivierung der Struktur-Komponente SK 1 bedeutet, dass die Funktion der Strukturkomponente im Automatisierungssystem zum Ablauf gebracht wird. Innerhalb des Funktionsplans kann eine Aktivierung einer Strukturkomponente durch farbliche Kennzeichnung der Ränder der Bausteine, die aktiviert werden, deutlich gemacht werden. Auch im zugehörigen unterlagerten Plan, wie er in Fig. 1 für die Strukturkomponente SK1 dargestellt ist, kann der Signalfluss anhand einer farblichen Kennzeichnung der einzelnen Bausteine und Konnektoren nachvollzogen werden.

Anschließend wird beschrieben, wie ein Austausch der Strukturkomponente SK1 aus Fig. 1 bei laufendem Betrieb des Automatisierungssystems unabhängig vom Ablauf der Funktion der Strukturkomponente durchgeführt wird.

Ein Austausch von Strukturkomponenten kann nur für Strukturkomponenten eines Typs durchgeführt werden, d.h. nur für gleiche Kennzeichnungen. Dies bedeutet, dass bei der Veränderung eines Typs der Strukturkomponente die Kennzeichnung der Strukturkomponente, ihre GUID beispielsweise, unverändert bleibt. Versionsnummern werden, wenn nicht explizit durch den Anwender bereits vollzogen, durch das System automatisch erhöht.

Die eigentliche Änderung der Strukturkomponente oder genauer ausgedrückt des Typs der Strukturkomponente findet offline in der Projektierungsumgebung statt. In der Bibliothek, in der alle Typen von Strukturkomponenten hinterlegt sind, wird in diesem Ausführungsbeispiel die Strukturkomponente SK1 geöffnet, manuell abgeändert und abgespeichert. Änderungen des Typs der Strukturkomponente können durch Hinzufügen oder Entfernen von enthaltenen Bausteinen, von Verschaltungen, von Parametern oder von externen Schnittstellen erfolgen.

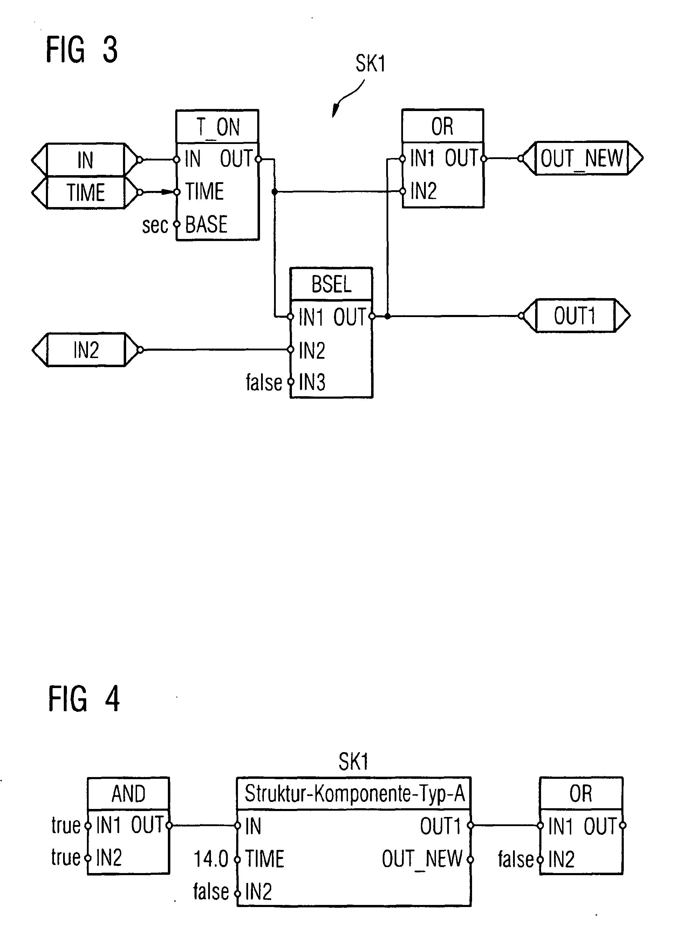

Der veränderte Typ der Strukturkomponente Typ A des beschriebenen Ausführungsbeispiels ist im Schaltbild von Fig. 3 dargestellt. Der Baustein AND von SK1 mit seiner zugehörigen Ausgangsschnittstelle OUT wurde entfernt und durch einen Baustein OR ersetzt. Die Verschaltungen innerhalb der Strukturkomponente wurden entsprechend modifiziert. Das gleiche gilt für die Ausgangsschnittstelle OUT, die jetzt zu OUT_NEW abgeändert wurde.

In einem nächsten Schritt wird in der Projektierungsumgebung die Aktualisierung der bereits in der Bibliothek platzierten veränderten Strukturkomponente des betreffenden Typs, welche durch die entsprechende Kennzeichnung identifiziert ist, angestoßen. Für die Aktualisierung können alle Instanzen oder nur eine Teilmenge ausgewählt werden. Dies bedeutet, dass die Änderungen der Strukturkomponente SK1 an allen Stellen des Funktionsplans durchgeführt werden. Die Ausführung der Funktion der ursprünglichen Strukturkomponente in der Ablaufumgebung des Automatisierungssystems wird dabei nicht gestört, da die Änderungen bisher nur in der Projektierungsumgebung vorgenommen wurden.

Ein Ausschnitt des Funktionsplans mit der veränderten Strukturkomponente ist in Fig. 4 dargestellt. An der Instanz ist der neue Ausgang OUT_NEW sichtbar, der ursprünglich vorhandene Ausgang ist nicht mehr sichtbar, obwohl der ursprüngliche Funktionsplan zu diesem Zeitpunkt in der Ablaufumgebung noch abgearbeitet wird.

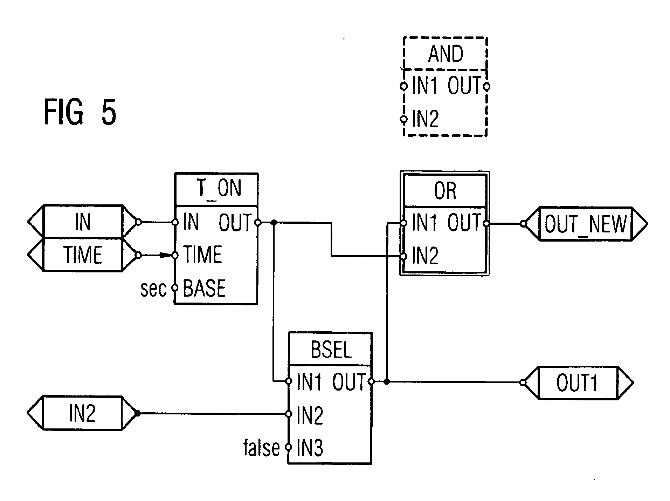

Im zugehörigen unterlagerten Plan, wie er in Fig. 5 dargestellt ist, sind die vorgenommenen Änderungen im Detail nachvollziehbar. Der ursprünglich vorhandene Baustein AND ist immer noch sichtbar, jedoch farblich abgesetzt und somit graphisch markiert. Dies bedeutet, dass der Baustein in der Automatisierung aktuell zum Ablauf kommt und noch aktiviert ist. Durch die graphische Markierung ist der Baustein jedoch in diesem Ausführungsbeispiel bereits als gelöscht gekennzeichnet, d.h. es ist kenntlich gemacht, dass der Baustein im Zuge der nächsten Aktivierung gelöscht werden soll. Die Strukturänderung ist demnach auf diese Weise vermerkt worden. Der neu hinzugefügte Baustein OR ist graphisch derart dargestellt, dass erkennbar ist, dass er noch nicht aktiviert worden ist. Beispielsweise kann der Rand des Bausteins OR farblich anders markiert werden als der Rand der aktivierten Bausteine.

Durch den Austausch der Instanz der Strukturkomponente im Funktionsplan sind intern demnach die zuvor am Typ der Strukturkomponente durchgeführten Änderungen in allen projektierten Instanzen in der Projektierungsumgebung nachvollzogen worden, als ob der Anwender praktisch gleichzeitig für alle betroffenen Instanzen die Änderungen manuell durchgeführt hätte.

In einem letzten Schritt muss die ausgetauschte Strukturkomponente aktiviert werden, damit die Änderungen und damit auch die Aktualisierung der Strukturkomponente im Automatisierungssystem zur Ausführung kommen. Dies erfolgt stoßfrei, d.h. ohne Unterbrechung des laufenden Betriebs. Dazu werden parallel und ohne Rückwirkung auf den laufenden Betrieb des Automatisierungssystems die vorgenommenen Änderungen in das Automatisierungssystem übertragen. Innerhalb des Automatisierungssystems wird hierzu in einem separaten, vom aktuellen im Automatisierungssystem ablaufenden Programm unabhängigen Konfigurationsbereich ein verändertes Programm angelegt. Dieses enthält die durch die geänderte Strukturkomponente geänderte Bausteinstruktur sowie die veränderten Parameter bzw. Verschaltungen. Nachdem diese Parallelkonfiguration vollständig durchgeführt worden ist, wird auf das durch diese Konfiguration veränderte Programm unterbrechungsfrei und für das Automatisierungssystem vollkommen transparent beim nächsten Zyklusstart umgeschaltet. Da nach der Umschaltung die vorherige Programmkonfiguration noch im Automatisierungsgerät vorhanden ist, besteht darüber hinaus die Möglichkeit, manuell oder aufgrund einer internen Bedienung (z.B. bei Programm-Überlast) auf die vorherige Konfiguration umzuschalten.

Nach der Aktivierung zeigt sich der in den Figuren 3 und 4 gezeigte Funktionsplan, wobei nun der OR-Baustein aktiviert ist, was ebenfalls graphisch angezeigt ist.

Das beschriebene Verfahren kann beispielsweise auch in der Programmiersprache Java realisiert werden. Es handelt sich um ein Software-Werkzeug auf Applikationsebene.

## Patentansprüche

1. Verfahren zum Austausch von Strukturkomponenten für ein Automatisierungssystem
wobei
- ein Typ einer Strukturkomponente mittels eines Projektierungswerkzeugs in einer Projektierungsumgebung erstellt und eindeutig **gekennzeichnet** wird,
- die Strukturkomponente in einem Funktionsplan projektiert, parametriert und mit anderen Bausteinen verschaltet wird,
- die projektierte Instanz der Strukturkomponente in der Ablaufumgebung aktiviert wird, wodurch die Funktion im Automatisierungssystem zum Ablauf gebracht wird,
**dadurch gekennzeichnet,**
**dass** während des laufenden Betriebs des Automatisierungssystems unabhängig vom Ablauf der Funktion der Strukturkomponente
- der Typ der Strukturkomponente mittels des Projektierungswerkzeugs in der Projektierungsumgebung geöffnet und verändert wird, wobei die Kennzeichnung erhalten bleibt,
- die Instanz der Strukturkomponente im Funktionsplan durch die veränderte Strukturkomponente ausgetauscht wird, wobei die Strukturänderungen entsprechend vermerkt werden,
- parallel und ohne Rückwirkung auf den laufenden Betrieb des Automatisierungssystems die ausgetauschte Strukturkomponente in das Automatisierungssystem übertragen wird,
- im Automatisierungssystem unterbrechungsfrei auf die durchgeführte Änderung umgeschaltet wird, so dass die veränderte und ausgetauschte Strukturkomponente aktiviert wird.

2. Verfahren nach Anspruch 1,
**dadurch gekennzeichnet,**
**dass** die Änderung des Typs der Strukturkomponente durch Hinzufügen oder Entfernen von enthaltenen Bausteinen, von Verschaltungen, von Parametern oder von externen Schnittstellen erfolgt.

3. Verfahren nach Anspruch 1 oder 2,
**dadurch gekennzeichnet,**
**dass** innerhalb des Automatisierungssystems mindestens zwei Konfigurationen der Projektierung angelegt sind,
**dass** im laufenden Betrieb stets eine dieser Konfigurationen im Automatisierungssystem abläuft
**dass** die ausgetauschte Strukturkomponente bei laufender erster Konfiguration in die zweite Konfiguration übertragen wird, und
**dass** anschließend unterbrechungsfrei auf die zweite Konfiguration umgeschaltet wird, so dass die veränderte und ausgetauschte Strukturkomponente aktiviert wird.

4. Verfahren nach Anspruch 3,
**dadurch gekennzeichnet,**
**dass** im Automatisierungssystem unterbrechungsfrei, falls erforderlich, auf die vorherige Konfiguration umgeschaltet werden kann.

5. Verfahren nach einem der vorhergehenden Ansprüche,
**dadurch gekennzeichnet,**
**dass** vor dem Einbringen projektierter Änderungen Konsistenzprüfungen im Automatisierungssystem durchgeführt werden.

## Claims

1. Method for exchanging structural components for an automation system, with
• a type of structural component being created and clearly identified in the project planning environment by means of a project planning tool,
• the structural component being planned into the project, parameterized and connected to other modules in a function plan,
• the projected instance of the structural component being activated in the runtime environment, as a result of which the function in the automation system is started,
**characterised in that**
during the ongoing operation of the automation system independently of the start of the function of the structural component,
- the type of structural component is opened and modified in the project planning environment by means of the project planning tool, with the identification being retained,
- the instance of the structural component in the functional plan is replaced by the modified structural component, with the structural modifications being noted accordingly,
- the exchanged structural component is transmitted into the automation system in parallel to the ongoing operation of the automation system and without repercussions thereon,
- a switchover to the implemented modification takes place without interruption in the automation system, so that the modified and exchanged structural component is activated.

2. Method according to claim 1,
**characterised in that** the modification of the type of structural component takes place by adding or removing contained modules, circuits, parameters or external interfaces.

3. Method according to claim 1 or 2,
**characterised in that**
at least two project planning configurations are applied within the automation system,
one of these configurations is always running in the automation system during its ongoing operation the exchanged structural component is transmitted into the second configuration while the first configuration is running, and
a switchover to the second configuration then takes place without interruption, so that the modified and exchanged structural component is activated.

4. Method according to claim 3,
**characterised in that**, if necessary, a switchover to the previous configuration can be undertaken without interruption in the automation system.

5. Method according to one of the preceding claims,
**characterised in that**
consistency checks are implemented in the automation system before projected modifications are incorporated.

## Revendications

1. Procédé d'échange de composants de structure pour un système d'automatisation
dans lequel
- on élabore un type d'un composant de structure au moyen d'un outil de conception et on le caractérise nettement,
- on fait la conception du composant de structure dans un plan fonctionnel, on le paramétrise et on le connecte à d'autres modules,
- on active l'instance conçue du composant de structure dans l'environnement de déroulement en mettant ainsi la fonction dans le système d'automatisation pour qu'elle se déroule,
**caractérisé**
**en ce que** pendant le fonctionnement courant du système d'automatisation et indépendamment du déroulement de la fonction du composant de structure
- on ouvre et on modifie dans l'environnement de conception le type du composant de structure au moyen de l'outil de conception, la caractérisation restant conservée,
- on remplace l'instance du composant de structure dans le plan de fonctionnement par le composant de structure modifiée, les modifications de structure étant marquées d'une manière correspondante,
- en parallèle et sans réaction sur le fonctionnement courant du système d'automatisation, on transmet le composant de structure remplacé au système d'automatisation,
- dans le système d'automatisation et sans interruption, on commute sur la modification effectuée, de manière à activer le composant de structure modifié et remplacé.

2. Procédé suivant la revendication 1,
**caractérisé**
**en ce que** l'on effectue la modification du type du composant de structure par addition ou élimination de modules contenus, de connexions, de paramètres ou d'interfaces externes.

3. Procédé suivant la revendication 1 ou 2,
**caractérisé**
**en ce que**, à l'intérieur du système d'automatisation, on met au moins deux configurations de la conception,
**en ce que**, dans le fonctionnement courant, l'une des ces configurations se déroule toujours dans le système d'automatisation,
**en ce que** l'on transporte le composant de structure remplacé, alors que la première configuration se déroule, dans la deuxième configuration, et
**en ce que**, ensuite et sans interruption, on commute sur la deuxième configuration, de manière à activer le composant de structure modifié et remplacé.

4. Procédé suivant la revendication 3,
**caractérisé**
**en ce que,** dans le système d'automatisation et sans interruption, on peut commuter si cela est nécessaire sur la configuration précédente.

5. Procédé suivant l'une des revendications précédentes,
**caractérisé**
**en ce que,** avant l'introduction de modifications de conception, on effectue des contrôles de conformité dans le système d'automatisation.
